# FASCICULE DE BREVET EUROPEEN

(11) **EP 1 187 869 B1**
(45) Date de publication et mention de la délivrance du brevet: **04.12.2002**
(21) Numéro de dépôt: 00929627.8
(22) Date de dépôt: 16.05.2000
(51) Int. Cl.: C08G 69/48

(54) **POLYAMIDES HYDRODISPERSIBLES A INSATURATIONS ETHYLENIQUES AUX EXTREMITES**
WASSERDISPERGIERBARE POLYAMIDE MIT ETHYLENISCH UNGESÄTTIGTEN ENDGRUPPEN
WATER DISPERSIBLE POLYAMIDES WITH ETHYLENICALLY UNSATURATED ENDS

(30) Priorité: 21.05.1999 FR 9906472
(43) Date de publication de la demande: 20.03.2002
(73) Titulaire: Atofina, 92800 Puteaux (FR)
(72) Inventeur: LINEMANN, Reinhard, F-27300 Bernay (FR)
(86) Numéro de dépôt international: FR0001339
(87) Numéro de publication internationale: WO00071603

(56) Documents cités:
- EP-A- 0 143 037
- EP-A- 0 147 267
- US-A- 3 483 104

## Description

L'invention se rapporte aux domaines de polyamides, en particulier aux polyamides hydrodispersibles insaturés ayant au plus deux insaturations située de préférence aux extrémités, à leur procédé de préparation, ainsi qu'à l'utilisation de tels polyamides dans différentes applications.

Les polyamides désignés ci-après par PA sont bien connus et largement décrits. Ils sont utilisés dans différentes industries en particulier dans l'industrie textile, papier, revêtement, cosmétiques et autres.

Pour certaines applications telles que celles nécessitant une modification par greffage de la chaîne polyamide ou une réticulation, il est utile d'avoir un PA ayant une, voire plusieurs doubles liaisons.

Pour d'autres applications, en particulier pour les formulations à base de compositions aqueuses il est nécessaire d'avoir un PA hydrodispersible, désigné ci-après par PAHD. Enfin pour des applications bien spécifiques il est nécessaire d'avoir un PA à la fois hydrodispersible ayant des insaturations. Un tel polyamide est désigné par la suite par PAHDI.

EP-A-147267 décrit un PA ayant une insaturation à chaque extrémité. Ce PA est obtenu selon le procédé consistant à chauffer à une température allant de 210°C à 300°C un mélange constitué de 2 à 240 moles d'un monomère de PA, de 2 moles d'au moins un composé insaturé et d'une mole d'un composé auxiliaire assurant la fixation du composé insaturé aux extrémités.

EP-A-143037 utilise pratiquement le même procédé pour préparer un PA ayant une seule insaturation à une extrémité.

US-A-3296204 décrit la préparation d'un polyamide ayant des groupes sulfonates condensés par des diacides hydrophiles porteur d'un groupe sulfonate sous forme de sel et des diamines.

Dans DE-C-2308266 des polyamides portant des groupes sulfonates sont utilisés comme additif d'extrusion des polyamides pour préparer des fibres textiles.

A notre connaissance il n'existe aucun document décrivant des PAHD présentant une ou plusieurs insaturations.

Le problème que se propose de résoudre la demanderesse est la préparation d'un polyamide répondant aux critères précédemment décrits, à savoir un polyamide hydrodispersible présentant au moins une insaturation à une extrémité. Un tel composé peut être aisément dispersé dans l'eau et peut subir des modifications tel qu'un greffage.

Un des objets de l'invention est un polyamide hydrodispersible ayant de 0.1 à 2 insaturations aux extrémités de chaîne et de préférence de 0.5 à 2 insaturations.

Un autre objet de l'invention est un procédé de préparation de PAHDI.

Les PAHD à insaturation (PAHDI) de l'invention se caractérisent par une masse moyenne en nombre allant de 500 à 30.000 g/mol et de préférence de 1000 à 10.000 g/mol. Le taux moyen en groupe hydrophile par chaîne de PA est de 0.5 à 49% en mole et de préférence de 3 à 25% en mole.

La masse moyenne de chaîne PA ainsi que le taux en groupe hydrophile jouent un rôle primordial dans l'hydrodispersabilité de PA. Les PAHDI préférés de l'invention ont une masse moyenne de 4000 à 10000, un taux moyen en groupe hydrophile de 5 à 15% en mole et un taux en insaturation au moins de 0.1 par chaîne.

Le procédé d'obtention des PAHDI de l'invention, constituant un autre objet de l'invention, consiste à chauffer à une température allant de 150° à 300°C, pendant une durée de 2 à 8 heures sous atmosphère inerte et une pression de 0.5 à 50 bars un mélange constitué de :
0 à 99 % en mole d'au moins un monomère (A) de PA,
0.5 à 50 % en mole d'au moins une diamine (B) ayant de 4 à 12 atomes de carbone,
0.5 à 49 % en mole d'au moins un diacide carboxylique (C) en 4 à 12 atomes de carbone et ayant un groupe hydrophile
0.5 à 30 % en moles d'au moins un diacide carboxylique (D) ayant 2 à 36 atomes de carbone, et
la quantité suffisante pour introduire au moins 0.1 insaturation par chaîne de PA d'au moins un composé (E) ayant une insaturation et pouvant jouer le rôle d'agent de terminaison dans la réaction de polycondensation.

Le procédé d'obtention des PAHDI, suivant l'invention, est caractérisé par le fait que le mélange des diacides (C) et (D) et des diamines (B), pris dans un rapport diacide/diamine = 1, est chauffé en présence d'un acide éthylénique répondant à la formule R¹R²C = CR³COOH, pour conduire à un PAHDI répondant à la formule

R¹R²C = CR³-CO-NH-PA-COOH (I)

dont un bout de chaîne porte le groupe insaturé R¹R²C = CR³CO... de l'acide employé.

Si l'on ajoute une diamine H₂N-B-NH₂, elle donne au chauffage, avec l'autre bout de chaîne du PAHDI (I), une terminaison aminée :

...R¹R²C = CR³-CO-NH-PA-CO-NH-B-NR₂ (II).

Par réaction d'un équivalent d'acide éthylénique avec le PAHD à I (II), amidifiant le -NH₂ du PAHDI (III) porteur de deux doubles liaisons, une à chaque bout de la chaîne:

R¹R²C=CR³-CO-NH-PA-CO-NH-B-NH-OC- CR³=CR¹R² (III).

Un autre élément inattendu, dans le procédé de l'invention, apparaît en ce que les trois réactions ci-dessus, conduisant aux structures (I), (II), (III), sont réalisables en un seul temps, si l'on mélange d'avance n moles des monomères (A), (B), (C), (D) pris dans un rapport acide/amine = 1 en présence de 0.1 à 2 moles d'acide éthylénique et 1 mole de diamine en excès.

De façon analogue, l'invention peut être mise en oeuvre par l'emploi d'une amine non saturée R¹R²C=CR³NH₂ qui conduit à un PAHDI à une de ses extrémités :

R¹R²C = CR³-NH-CO-PA-NH₂ (IV).

Pour passer à un PAHDI di-insaturé, on peut traiter (IV) par un acide oléfinique, en vue de l'amidation du NH₂ restant :

R¹R²C=CR³-NH-CO-PA- NH-CO-CR³ = CR¹R² (V).

Une autre façon pour fixer le groupe insaturé est d'employer d'abord comme composé intermédiaire un diacide HOOC-(C)-COOH ou HOOC-(D)-COOH et ensuite une 2^{ème} mole d'amine R¹R²C=CR³NH₂ ou, par exemple, un composé époxy de façon réciproque à celle des réactions (II)-(III) vues plus haut.

Ce qui précède donne une idée de la structure des PAHDI obtenus suivant l'invention.

Pour obtenir une incorporation statique des monomères hydrophiles (en présence d'un monomère insaturé), par exemple un diacide porteur du groupe sulfonate, il est préférable de conduire le procédé pour préparer de PAHDI de l'invention à l'équilibre et/ou à une augmentation de la température pendant la détente.

R^{1,}R² et R³ Sont définis plus loin.

De manière générale le monomère (A) de PA est soit un acide monoaminocarboxylique (A1) ayant de 2 à 12 atomes de carbone et le lactame correspondant, soit un mélange de deux composés l'un étant un diacide carboxylique et l'autre une diamine pris dans un rapport diacide/diamine =1/1.

Les monomères (A) sont choisis parmi les oméga aminoacides, leurs lactames ou des oméga-amino-acides, par exemple: caprolactame, énanthlactame, lauryl-lactame, acide amino-caproïque, cenantholactame, acide amino-7 heptanoïque, l'acide 11-amino-undecanoïque, l'acide 12 amino-dodecanoïque.

Le monomère (A) préféré de l'invention est la caprolactame, lauryl-lactame, acide amino-caproïque, l'acide 11-amino-undecanoïque.

Les monomères diamines (B) et diacides (C) et/ou (D) sont utilisés soit en mélange soit comme sel d'acides (A2).

Les diamines (B) sont choisis parmi :

L'hexaméthylènediamine, la décaméthylènediamine, la dodécaméthylènediamine, le 1,5-diamine-hexane, le 2,2,4-triméthyl-1,6-diamino-hexane, la pipérazine, le 3,3'-diméthyl-4,4'-diamino-dicyclohexylméthane, le 4,4'-diamino-dicyclohexyl-méthane, le 2,2'-(4,4'-diaminodicyclohexyl)-propane, l'isophoronediamine, la 1,4-diaminocyclohexane, méta-xylylène-diamine.

Il est également possible d'utiliser des polyols diamines tels que ceux commercialisés sous le nom « Jeffamine » par la société Huntsman Corp.

Les grades préférés sont le Jeffamine D400 et le Jeffamine D2000. Ces chaînes polyéthers augmentent notamment l'hydrophilie des résines. Leurs taux pondéral peut atteindre jusqu'à 60% en poids du poids total de PAHDI.

Les diamines (B) préférées sont l'hexaméthylène diamine, la tétraméthylènediamine, le 2,2,4-triméthyl-1,6-diamino-hexane, la pipérazine.

Le diacide (C) ayant un groupe hydrophile est choisi parmi les diacides ayant au moins un groupe sulfonate. Le groupe sulfonate est généralement introduit par l'intermédiaire d'un diacide carboxylique sous la forme d'un sel de lithium, de sodium, de potassium ou d'ammonium. Les composés préférés de l'invention sont les sels d'acide isophtalique.

Le diacide (D) est choisi dans le groupe constitué des acides isophtalique, adipique, azélaïque, sébacique, dodécanoïque, butane-doïque, 1,4-cyclohexyl dicarboxylique, téréphtalique (taux inférieur à 12% pondéral), des acides gras dimérisés (ces acides gras dimérisés ont de préférence une teneur en dimère d'au moins 98%, de préférence ils sont hydrogénés ; ils sont commercialisés sous la marque « PRIPOL » par la société « UNICHEMA », les grades les plus intéresants sont les PRIPOL 1008, le PRIPOL 1009 et le PRIPOL 1013 ou sous la marque EMPOL par la société HENKEL.

Le diacide (D) préféré est choisi parmi l'acide adipique, l'acide isophtalique ou l'acide téréphtalique.

La quantité en agent de terminaison à introduire dépend de la masse de la chaîne qu'on souhaite obtenir.

L'agent de terminaison (E) ayant une insaturation est choisi dans le groupe contenant les molécules répondant à la formule suivante : R¹R²C = CR³X (1) où les groupes ou les atomes R¹, R², R³ semblables ou différents, sont : H, halogène, alkyle, aryle, en particulier phényle et carboxyle, norbornyle, thiényle, pyrrolyle ou furanyle, tandis que le groupe actif X peut être :
-(CH₂)ₙCOOH avec n=0 à 17 ; -CH₂NH(CH₂)ₙCOOH ;-(OCH2CH₂)ₖOH avec k = 20
-COO-glydicyl ;
Y-C₆H₄-(CH₂)ₙ, -COOR avec n' = 0 ou 1, Y étant -COO, -CONH, R étant H, alkyle ou aryle ;
-CH₂OH ; --(CH₂)ₘNH₂ avec m = 0 à 18 ou -(OCH₂CH₂)OH.

Ainsi, des exemples particulièrement favorables des composés selon la formule (1) sont-ils :

Acides ou esters des acides non saturés, acrylique, méthacrylique, cinnamique, crotonique, citraconique, itaconique, vinylacétique, undécylénique, maléique, fumarique, 5'-norbornène-2 acrylique, 3'-pyrrolyl-2 acrylique, N-allyl aminobezoique, N-acryloyl aminobezoique, N-méthacryloyl aminobenzoique, acryloyloxybenzoique, méthacryloyl oxybenzoique, N-acryloyl ou N-métacryloyl p-aminophénylacétique, N-allyl amino-11-undécanoique, et autres, similaires.

Un autre type de composés insaturés, convenant au procédé suivant l'invention, peuvent être possibles sans se limiter : les acides et les esters N-maléimido : hexanoïques, p.benzoïques, dodécanoïques, etc.

On peut citer les anhydrides et les imides dérivés des anhydrides tels que tétrahydrophtalique, p. N-maléimido benzoïque, p-(endo-cis-bicyclo(2,2,1)-5 heptène-2, 3 dicarboxylique).

L'introduction du groupe sulfonate est réalisée à chaud alors que l'insaturation peut être introduite à froid.

Selon l'invention on procède de la manière décrite dans les exemples, lesquels illustrent l'invention sans en limiter la portée.

### Exemples décrivant l'invention

### Exemple 1 :

Préparation en introduisant tous les monomères au départ d'un PAHDI mono insaturé fonctionnalisé par l'acide cinnamique.

On opère dans un réacteur de 4 litres de capacité, à trois tubulures : entrée de gaz, communication avec un système de distillation comprenant un condenseur relié à un récepteur de distillat ainsi qu'un agitateur à ancre. Dans ce réacteur, on introduit : 339.0 g de lactame 6 soit 3.0 mole, 196.2 g de sel AH (sel d'acide adipique et d'hexaméthylènediamine) soit 0.75 mole, 187.34 g d'hexaméthylènediamine soit 1.615 mole, 168.5 g d'acide isophtalique soit 1.015 mole, 161.0 de mono sel de sodium de l'acide sulfo isophtalique soit 0.6 mole, et 22.5 g d'acide cinnamique soit 0.152 mole ce qui correspond à une unité d'acide cinnamique par chaîne PAHDI et 50 g l'eau.

Le réacteur est purgé à l'azote puis chauffé toutes vannes fermées jusqu'à 200°C matière en 1 heure, la pression est alors de 6.0 bar. A ce moment, on met l'agitation et la température matière est montée en 1 heure à 240°C, la pression est alors de 15 bars. On laisse la réaction se faire à 240°C matière pendant 4 heures, la pression atteint à la fin des 4 heures de palier 18 bars et se stabilise, ce qui veut dire premièrement que tous les monomères réagissent et deuxièmement que l'équilibre de formation des amides est atteint. On commence à ce moment la détente (pendant 90 minutes), la température matière à la fin de la détente est de 270°C. On fait passer un courant d'azote de 30l/h pendant 15 minutes et le PAHD est sorti du réacteur, recueilli dans un plateau refroidi pour assurer une solidification rapide.

Le produit obtenu est légèrement jaune, friable, inodore. La masse moléculaire moyenne en nombre mesurée par viscosimètre est de 6650 g/mole.

La Tg est de 89°C (mesuré par DSC : 10K/min).

Le PAHD est facilement dispersable dans l'eau jusqu'à 40% en poids. La taille des particules du PAHD d'une dispersion est de 62 nanomètres.

### Exemple 2 :

Préparation en introduisant tous les monomères au départ d'un PAHDI mono insaturé fonctionnalisé par l'acide crotonique.

Le mode opératoire correspond à celui de l'exemple 1, sauf qu'au lieu de l'acide cinnamique on charge 13.07 g d'acide crotonique (soit 0.152 mole), ce qui correspond à une unité d'acide crotonique par chaîne PAHDI.

Le produit obtenu est légèrement jaune, friable, inodore. La masse moléculaire moyenne en nombre est de 6600 g/mole.

La Tg est de 83°C (mesuré par DSC : 10K/min).

Le PAHDI est facilement dispersable dans l'eau jusqu'à 40% en poids. La taille des particules du PAHDI d'une dispersion est de 100 nanomètres.

### Exemple 3 :

Préparation en introduisant tous les monomères au départ d'un PAHDI fonctionnalisé partiellement par 0.5 équivalents d'acide crotonique par chaîne PAHD.

Le mode opératoire correspond à celui de l'exemple 1, sauf que dans ce réacteur, on introduit : 339.0 g de lactame 6 soit 3.0 mole, 196.5 g de sel AH (sel d'acide adipique et d'hexaméthylènediamine) soit 0.75 mole, 205.3 g d'hexaméthylènediamine soit 1.767 mole, 168.5 g d'acide isophtalique soit 1.015 mole, 161.0 de mono sel de sodium de l'acide sulfo isophtalique soit 0.6 mole, et 6.55 g d'acide crotonique soit 0.076 mole ce qui correspond à 0.5 unité d'acide cinnamique par chaîne PAHDI et 50 g l'eau.

Le produit obtenu est légèrement jaune, friable, inodore. La masse moléculaire moyenne en nombre est de 6600 g/mole.

La Tg est de 90°C (mesuré par DSC : 10K/min).

Le PAHD est facilement dispersable dans l'eau jusqu'à 40% en poids. La taille des particules du PAHD d'une dispersion est de 100 nanomètres.

## Revendications

1. Polyamide hydrodispersible de masse moyenne en nombre de 500 à 30000 g/mole ayant aux extrémités de 0,1 à 2 insaturations par chaîne et de 0,5 à 49% en mole de reste de monomère (C) renfermant au moins un groupe hydrophile distribués le long de la chaîne.

2. Polyamide selon la revendication 1 **caractérisé en ce qu'**il renferme de préférence de 3 à 25% en mole de reste de monomère (C).

3. Polyamide selon la revendication 1 ou 2 **caractérisé en ce qu'**il renferme aux extrémités de 0,5 à 2 insaturations par chaîne.

4. Polyamide selon l'une des revendications précédentes **caractérisé en ce que** le monomère (C) est choisi dans le groupe constitué par les diacides carboxyliques en 4 à 12 atomes de carbone et ayant au moins un groupe sulfonate.

5. Procédé de préparation de polyamide hydrodispersible qui consistant en le chauffage à une température allant de 150°C à 300°C, pendant une durée de 2 à 8 heures sous atmosphère inerte et une pression de 0.5 à 50 bars, un mélange constitué de :
0 à 99% en mole d'au moins un monomère (A) de PA,
0.5 à 50% en mole d'au moins un diamine (B) ayant de 4 à 12 atomes de carbone
0.5 à 49% en mole d'au moins un diacide carboxylique (C) en 4 à 12 atomes de carbone et ayant un groupe sulfonate
0.5 à 30% en mole d'au moins un diacide carboxylique (D) ayant 2 à 36 atomes de carbone, et
la quantité suffisante pour introduire au moins 0.1 insaturation par chaîne de PA d'au moins un composé (E) ayant une insaturation et pouvant jouer le rôle d'agent de terminaison dans la réaction de polycondensation.

6. Procédé selon la revendication 5 **caractérisé en ce que** A est choisi parmi les oméga aminoacides, leurs lactames ou des oméga-amino-acides, par exemple : caprolactame, énanthlactame, lauryl-lactame, acide amino-caproïque, cenantholactame, acide amino-7 heptanoïque, l'acide 11-amino-undecanoïque, l'acide 12 amino-dodecanoïque.

7. Procédé selon la revendication 5 ou 6 **caractérisé en ce que** B est choisi parmi l'hexaméthylènediamine, la décaméthylènediamine, la dodécaméthylènediamine, le 1,5-diamine-hexane, le 2,2,4-triméthyl-1,6-diamino-hexane, la pipérazine, le 3,3'-diméthyl-4,4'-diamino-dicyclohexylméthane, le 4,4'-diamino-dicyclohexyl-méthane, le 2,2'-(4,4'-diaminodicyclohexyl)-propane, l'isophoronediamine, la 1,4-diaminocyclohexane, méta-xylylène-diamine.

8. Procédé selon l'une des revendications 5 à 7 **caractérisé en ce que** D est choisi dans le groupe constitué des acides isophtalique, adipique, azélaïque, sébacique, dodécanoïque, butane-doïque, 1,4-cyclohexyl dicarboxylique, téréphtalique (taux inférieur à 12% pondéral), des acides gras dimérisés (ces acides gras dimérisés ont de préférence une teneur en dimère d'au moins 98%, de préférence ils sont hydrogénés.

9. Procédé selon l'une des revendications 5 à 8 **caractérisé en ce que** E est choisi parmi les acides ou esters des acides insaturés tels que l'acide acrylique, méthacrylique, cinnamique, crotonique, citraconique, itaconique, vinylacétique, undécylénique, maléique, fumarique, 5'-norbornène-2 acrylique, 3'-pyrrolyl-2 acrylique, N-allyl aminobezoique, N-acryloyl aminobezoique, N-méthacryloyl aminobenzoique, acryloyloxybenzoique, méthacryloyl oxybenzoique, N-acryloyl ou N-métacryloyl p-aminophénylacétique, N-allyl amino-11-undécanoique, et similaires.

10. Procédé selon l'une des revendications 5 à 9 **caractérisé en ce que** A, B, C et D sont pris ensemble dans un rapport acide/amine = 1 en présence de 0,1 à 2 moles d'acides éthylêniques et 1 mole de diamine.

## Claims

1. Water-dispersible polyamide of number-average mass ranging from 500 to 30,000 g/mol having, at the ends, from 0.1 to 2 unsaturated groups per chain and from 0.5 to 49 mol% of monomer (C) residue containing at least one hydrophilic group, these being distributed along the chain.

2. Polyamide according to Claim 1, **characterized in that** it preferably contains from 3 to 25 mol% of monomer (C) residue.

3. Polyamide according to Claim 1 or 2, **characterized in that** it contains, at the ends, from 0.5 to 2 unsaturated groups per chain.

4. Polyamide according to one of the preceding claims, **characterized in that** the monomer (C) is chosen from the group consisting of dicarboxylic acids having 4 to 12 carbon atoms and having at least one sulphonate group.

5. Method for the preparation of a water-dispersible polyamide, which consists in heating, to a temperature ranging from 150°C to 300°C, for a time of 2 to 8 hours in an inert atmosphere and at a pressure of 0.5 to 50 bar, a mixture consisting of:
0 to 99 mol% of at least one PA monomer (A);
0.5 to 50 mol% of at least one diamine (B) having from 4 to 12 carbon atoms;
0.5 to 49 mol% of at least one dicarboxylic acid (C) having 4 to 12 carbon atoms and having a sulphonate group;
0.5 to 30 mol% of at least one dicarboxylic acid (D) having 2 to 36 carbon atoms; and
the sufficient amount of at least one compound (E), having an unsaturated group and able to fulfil the role of a terminator in the polycondensation reaction, in order to introduce at least 0.1 unsaturated group per PA chain.

6. Method according to Claim 5, **characterized in that** A is chosen from omega-amino acids, their lactams or omega-amino acids, for example: caprolactam, enantholactam, lauryllactam, aminocaproic acid, oenantholactam, 7-aminoheptanoic acid, 11-aminoundecanoic acid and 12-amino dodecanoic acid.

7. Method according to Claim 5 or 6, **characterized in that** B is chosen from hexamethylenediamine, decamethylenediamine, dodecamethylenediamine, 1,5-diaminohexane, 2,2,4-trimethyl-1,6-diaminohexane, piperazine, 3,3'-dimethyl-4,4-diaminodicyclohexyl-methane, 4,4'-diaminodicyclohexylmethane, 2,2'-(4,4'-diaminodicyclohexyl)propane, isophoronediamine, 1,4-diaminocyclohexane and meta-xylylenediamine.

8. Method according to one of Claims 5 to 7, **characterized in that** D is chosen from the group consisting of isophthalic, adipic, azelaic, sebacic, dodecanoic, butane doic, 1,4'-cyclohexyl dicarboxylic and terephthalic acids (content less than 12% by weight) and dimerized fatty acids (these dimerized fatty acids preferably have a dimer content of at least 98% and preferably they are hydrogenated).

9. Method according to one of Claims 5 to 8, **characterized in that** E is chosen from unsaturated acids or acid esters, such as acrylic, methacrylic, cinnamic, crotonic, citraconic, itaconic, vinylacetic, undecylenic, maleic, fumaric, 2-(5'-norbornyl)acrylic, 2-(3'-pyrrolyl)acrylic, N-allylaminobenzoic, N-acryloylaminobenzoic, N-methacryloylaminobenzoic, acryloyloxybenzoic, methacryloyloxybenzoic, N-acryloyl- or N-methacryloyl-p-aminophenylacetic and N-allyl-11-aminoundecanoic acids, and the like.

10. Method according to one of Claims 5 to 9, **characterized in that** A, B, C and D are taken together in an acid/amine ratio of 1 in the presence of 0.1 to 2 mol of ethylenic acids and 1 mol of diamine.

## Patentansprüche

1. In Wasser dispergierbares Polyamid mit einem Zahlenmittel der Molmasse von 500 bis 30 000 g/mol, das an den Enden 0,1 bis 2 ungesättigte Bindungen pro Kette und über die Kette verteilt 0,5 bis 49 Mol-% Monomerrest (C) aufweist, der mindestens eine hydrophile Gruppe trägt.

2. Polyamid nach Anspruch 1, **dadurch gekennzeichnet, daß** es vorzugsweise 3 bis 25 Mol-% Monomerrest (C) enthält.

3. Polyamid nach Anspruch 1 oder 2, **dadurch gekennzeichnet, daß** es an den Enden 0,5 bis 2 ungesättigte Bindungen pro Kette trägt.

4. Polyamid nach einem der vorhergehenden Ansprüche, **dadurch gekennzeichnet, daß** das Monomer (C) unter den Dicarbonsäuren mit 4 bis 12 Kohlenstoffatomen, die mindestens eine Sulfonatgruppe tragen, ausgewählt ist.

5. Verfahren zur Herstellung eines in Wasser dispergierbaren Polyamid, das darin besteht, ein Gemisch aus den folgenden Bestandteilen während einer Zeitdauer von 2 bis 8 Stunden unter einer inerten Atmosphäre bei einem Druck von 0,5 bis 50 bar auf eine Temperatur im Bereich von 150 °C bis 300 °C zu erwärmen:
0 bis 99 Mol-% mindestens eines PA-Monomers (A),
0,5 bis 50 Mol-% mindestens eines Diamins (B) mit 4 bis 12 Kohlenstoffatomen,
0,5 bis 49 Mol-% mindestens einer Dicarbonsäure (C) mit 4 bis 12 Kohlenstoffatomen und einer Sulfonatgruppe,
0,5 bis 30 Mol-% mindestens einer Dicarbonsäure (D) mit 2 bis 36 Kohlenstoffatomen, und
mindestens eine Verbindung (E) mit ungesättigter Bindung in einer Menge, die ausreichend ist, um mindestens 0,1 ungesättigte Bindungen pro PA-Kette einzubringen, die bei der Polykondensation die Aufgabe eines Kettenabbruchmittels übernehmen kann.

6. Verfahren nach Anspruch 5, **dadurch gekennzeichnet, daß** A unter den omega-Aminosäuren, ihren Lactamen oder omega-Aminosäuren ausgewählt ist, beispielsweise: Caprolactam, Enanthlactam, Lauryllactam, Aminocapronsäure, Oenantholactam, 7-Aminoheptansäure, 11-Aminoundecansäure oder 12-Aminododecansäure.

7. Verfahren nach Anspruch 5 oder 6, **dadurch gekennzeichnet, daß** B unter Hexamethylendiamin, Decamethylendiamin, Dodecamethylendiamin, 1,5-Diaminohexan, 2,2,4-Trimethyl-1,6-diaminohexan, Piperazin, 3,3'-Dimethyl-4,4'-diaminodicyclohexylmethan, 4,4'-Diamiodicyclohexylmethan, 2,2'-(4,4'-Diaminodicyclohexyl)-propan, Isophorondiamin, 1,4-Diaminocyclohexan und meta-Xylylendiamin ausgewählt ist.

8. Verfahren nach einem der Ansprüche 5 bis 7, **dadurch gekennzeichnet, daß** D unter Isophthalsäure, Adipinsäure, Azelainsäure, Sebacinsäure, Dodecandisäure, Butandisäure, 1,4-Cyclohexyldicarbonsäure, Terephthalsäure (Gehalt unter 12 Gew.-%) und dimerisierten Fettsäuren (die dimerisierten Fettsäuren weisen vorzugsweise einen Dimergehalt von mindestens 98 % auf und sind vorzugsweise hydriert) ausgewählt ist.

9. Verfahren nach einem der Ansprüche 5 bis 8, **dadurch gekennzeichnet, daß** E unter den ungesättigten Säuren oder Estern von ungesättigten Säuren ausgewählt ist, wie Acrylsäure, Methacrylsäure, Zimtsäure, Crotonsäure, Citraconsäure, Itaconsäure, Vinylessigsäure, Undecylensäure, Maleinsäure, Fumarsäure, 5'-Norbornen-2-acrylsäure, 3'-Pyrrolyl-2-acrylsäure, N-Allylaminobenzoesäure, N-Acryloylaminobenzoesäure, N-Methacryloylaminobenzoesäure, Acryloyloxybenzoesäure, Methacryloyloxybenzoesäure, N-Acryloyl- oder N-Methacryloyl-paminophenylessigsäure, N-Allylamino-11-undecansäure und dergleichen.

10. Verfahren nach einem der Ansprüche 5 bis 9, **dadurch gekennzeichnet, daß** A, B, C und D gemeinsam in einem Verhältnis Säure/Amin = 1 mit 0,1 bis 2 mol Säuren mit ethylenischer Doppelbindung und 1 mol Diamin in Kontakt gebracht werden.
